# EUROPÄISCHE PATENTSCHRIFT

(11) **EP 1 519 833 B1**
(45) Veröffentlichungstag und Bekanntmachung des Hinweises auf die Patenterteilung: **08.03.2006**
(21) Anmeldenummer: 03762687.6
(22) Anmeldetag: 26.06.2003
(51) Int. Cl.: B32B 5/26, D21F 7/08, D04H 13/00, D21F 7/10, D21F 1/00, B32B 5/06, B29D 29/06, B65G 15/38, C08J 5/04, C08J 5/24, B29C 51/14, B29C 70/02, D21H 27/30, B64G 1/58, B32B 5/22, D21H 19/68, D21H 27/40

(54) **PRODUKT UND VERFAHREN ZUR HERSTELLUNG EINES VLIESSTOFFES MITTELS HYDRODYNAMISCHER VERNADELUNG**
PRODUCT AND METHOD FOR PRODUCING A NON-WOVEN FABRIC BY MEANS OF HYDRODYNAMIC NEEDLING
PRODUIT ET PROCEDE DE FABRICATION D'UN NON-TISSE PAR AIGUILLETAGE HYDRODYNAMIQUE

(30) Priorität: 05.07.2002 DE 10230555; 25.07.2002 DE 10233991
(43) Veröffentlichungstag der Anmeldung: 06.04.2005
(73) Patentinhaber: Fleissner GmbH, 63329 Egelsbach (DE)
(72) Erfinder: FLEISSNER, Gerold, CH-6300 Zug (CH)
(74) Vertreter: Meyer-Dulheuer, Karl-Hermann
(86) Internationale Anmeldenummer: PCT/EP2003/050267
(87) Internationale Veröffentlichungsnummer: WO 2004/005019

(56) Entgegenhaltungen:
- EP-A- 0 836 930
- US-A- 4 428 998
- US-A- 4 769 274
- US-A- 5 190 802
- US-A- 5 939 176
- US-A1- 2002 013 109

## Beschreibung

Durch die US-A-6 110 848 ist ein dreilagiges Sandwichvlies bekannt, dessen Außenschichten aus Stapelfasern einer Länge von 30 - 100 mm Länge bestehen und das in der Mitte ein Pulpvlies aufweist, das auch aus einem Gemisch aus und mit anderen Fasern wie Naturfasern oder Synthesefasern bestehen kann.

Der Erfindung liegt die Aufgabe zugrunde, ein Verfahren zur Herstellung eines Sandwichvlieses zu bilden, das besondere Eigenschaften ermöglicht. So soll das Endprodukt z. B. einseitig stark flüssigkeitsaufnahmefähig sein, während die andere Oberfläche eher dicht oder für andere Flüssigkeiten zur Aufnahme besser geeignet sein soll, jedenfalls sich von der anderen Oberfläche in seinen Eigenschaften unterscheiden soll.

Zur Lösung der Aufgabe ist vorgesehen, ein Verfahren zur Herstellung eines mindestens vierlagigen Sandwichvliesstoffes zu entwickeln durch fortlaufendes Bilden der Schichten, also zuerst der Bodenschicht, dann der zumindest beiden Mittelschichten und letztlich der Deckschicht, dann die kontinuierliche Verfestigung des jedenfalls vierlagigen Vliesstoffs allein mittels der hydrodynamischen Vernadelung zu bewirken und eine Trocknung des Vliesstoffs anzuschließen, wobei die beiden äußeren Schichten aus Vliesen aus Stapelfasern bis 100 mm Länge, die mittels des Kardiervorganges hergestellt, oder aus Spunbond- oder Meltblownfasern gebildet werden, und die mindestens beiden von den Außenschichten abgedeckten Innenschichten aus unterschiedlichen Pulpfasern oder Pulpfasern vermischt mit Synthesefasern oder Naturfasern hergestellt werden, und wobei die jedenfalls beiden Mittelschichten unterschiedliche Flüssigkeitsaufnahmefähigkeiten aufweisen. Die Pulpfasern mit anderen Fasern, wie Synthesefasern oder Naturfasern, können auch aus saugfähigen Substanzen; wie z. B. Superabsorber bestehen.

Die Möglichkeit, die beiden inneren Schichten aus unterschiedlichen Fasern, die unterschiedliche Aufgaben, Eigenschaften haben, herzustellen, hat den Vorteil, dass ein solches Wischtuch, Hygieneprodukt oder dgl. auf den beiden Oberflächen unterschiedliche Aufgaben lösen kann. Die eine Seite kann z. B. mehr Flüssigkeit aufnehmen als die andere, dafür kann man aber mit dieser anderen Oberfläche besser reiben od. dgl. agieren. So kann, die eine innenschicht aus längern Pulpfasern bis zu 30 mm Länge bestehen, während die andere Schicht aus kürzeren Pulpfasern wie 2 - 5 mm oder aus hydrophilen Synthesefasern hergestellt sein kann. Auch können Flachsfasern, SAP-Fasern oder solche mit einem anderen Querschnittsprofil zur Anwendung kommen. Die beiden Innenschichten können beide saugende Eigenschaften haben, jedoch zusätzlich sich wesentlich unterscheiden.

Die beiden Außenschichten sollten aus kardierten Faserschichten, aus Spunbond-, Meltblownvliesen oder aus Fasern anderer Faserstruktur bestehen, deren Faserlängen dem jeweiligen Produkt angepasst werden kann. Es kann aber auch ein anderes Vliesbildungsverfahren wie Spunbond, Meltblown oder das Nanovalverfahren gemäß der DE-PS 199 29 709 zur Anwendung kommen. Selbstverständlich können auch einzelne fertig voraus gebildete Tissueschichten zur Sandwichvliesbildung abgelegt werden. Es ist auch eine Sandwichvliesbildung denkbar, bei der die einzelnen Schichten von einer Rolle mit aufgewickelten Einzelvliesen, Gittern, Geweben und dgl. abgezogen werden. Sollte eine Krempel zum Einsatz kommen, die gleich zwei oder drei Krempelfaserschichten herstellt (d. h. über zwei oder drei Abnehmer), so können von diesen nur die obere Schicht einer Kalandrierung, einer Heißluftverfestigung oder einer anderen Art der Vorverfestigung unterworfen werden, womit die den Griff des fertigen Produkts bestimmende untere Schicht flauschig verbleibt.

## Patentansprüche

1. Verfahren zur Herstellung eines mindestens vierlagigen Sandwichvliesstoffes durch fortlaufendes Bilden der Schichten, also zuerst der Bodenschicht, dann der zumindest beiden Mittelschichten und letztlich der Deckschicht, dann der kontinuierlichen Verfestigung des jedenfalls vierlagigen Vliesstoffs allein mittels der hydrodynamischen Vernadelung und der abschließenden Trocknung des Vliesstoffs, wobei die beiden äußeren Schichten aus Vliesen aus Stapelfasern bis 100 mm Länge, die mittels des Kardiervorganges hergestellt, oder aus Spunbond- oder Meltblownfasern gebildet werden, und die mindestens beiden von den Außenschichten abgedeckten Innenschichten aus unterschiedlichen Pulpfasern oder Pulpfasern vermischt mit Synthesefasern oder Naturfasern hergestellt werden, und wobei die beiden Mittelschichten unterschiedliche Flüssigkeitsaufnahmefähigkeiten aufweisen.

2. Verfahren zur Herstellung eines Vliesstoffs nach Anspruch 1, **dadurch gekennzeichnet, dass** eine der Schichten zwischen den Außenschichten aus einem gitterähnlichen Vlies, einem Gitter aus beliebigem Kunststoff oder aus beliebigen anderen Fasern od. dgl. hergestellt wird.

3. Verfahren zur Herstellung eines Vliesstoffs nach Anspruch 1, **dadurch gekennzeichnet, dass** das Sandwichvlies von einer gitterähnlichen Lage außen abgedeckt wird.

## Claims

1. Method for manufacturing an at least four-layer sandwich nonwoven by continuous formation of layers, that is first the base layer, then the at least two middle layers, and finally the cover layer, then the continuous bonding of the, in any case, four-layer nonwoven merely by means of hydrodynamic needling and subsequent drying of the nonwoven, wherein the two outer layers are formed of nonwovens made of staple fibres up to 100 mm long produced by means of the carding process, or of spunbond or meltblown fibres and the at least two of the inner layers covered by the outer layers are made of various pulp fibres or pulp fibres mixed with synthetic or natural fibres, and wherein the two middle layers have different liquid absorption capacities.

2. The method for manufacturing a nonwoven according to claim 1, **characterised in that** one of the layers between the outer layers is made of a lattice-like nonwoven, a lattice of any plastic or of any other fibres or the like.

3. The method for manufacturing a nonwoven according to claim 1, **characterised in that** the sandwich nonwoven is covered by a lattice-like layer on the outside.

## Revendications

1. Procédé de fabrication d'au moins un non-tissé en sandwich à au moins quatre couches, en formant en continu les couches, à savoir, d'abord la couche de fond, puis lesdites au moins deux couches moyennes, et finalement la couche de recouvrement, en fixant ensuite en continu le non-tissé à quatre couches en tout cas, seul, au moyen de l'aiguilletage hydrodynamique suivi par le séchage du non-tissé, les deux couches externes étant formées de non-tissés constitués de fibrannes jusqu'à une longueur de 100 mm, qui sont fabriqués au moyen du processus de cardage, ou bien constitués de fibres liées par filage ou soufflées à l'état fondu, et lesdites au moins deux couches intérieures recouvertes des couches externes, étant fabriquées en différentes fibres de pâte à papier ou de fibres de pâte à papier mélangées à des fibres synthétiques ou à des fibres naturelles, et les deux couches moyennes présentant différentes capacités d'absorption de liquide.

2. Procédé de fabrication d'un non-tissé selon la revendication 1, **caractérisé en ce que** l'une des couches entre les couches externes est fabriquée en un non-tissé similaire à une grille, en une grille d'une matière plastique quelconque ou en d'autres fibres quelconques ou analogues.

3. Procédé de fabrication d'un non-tissé selon la revendication 1, **caractérisé en ce que** le non-tissé en sandwich est recouvert extérieurement par une couche similaire à une grille.
